# EUROPEAN PATENT SPECIFICATION

(11) **EP 2 103 796 B1**
(45) Date of publication and mention of the grant of the patent: **26.01.2011**
(21) Application number: 09250650.0
(22) Date of filing: 09.03.2009
(51) Int. Cl.: F02D 9/00, F02D 11/10, F02D 41/04

(54) **Throttle opening control device, motorcycle, and method for producing control map**
Drosselklappenöffnungssteuervorrichtung, Motorrad und Verfahren zur Herstellung einer Steuerungskarte
Dispositif de contrôle d'ouverture de papillon, motocyclette et procédé de production de carte de contrôle

(30) Priority: 17.03.2008 JP 2008067042
(43) Date of publication of application: 23.09.2009
(60) Divisional application: 10165764.1
(73) Proprietor: Yamaha Hatsudoki Kabushiki Kaisha, Shizuoka-ken Shizuoka 438-8501 (JP)
(72) Inventor: Nakagawa, Yoshitomi, Iwata-shi Shizuka-ken, 438-8501 (JP)
(74) Representative: Grünecker, Kinkeldey, Stockmair & Schwanhäusser Anwaltssozietät

(56) References cited:
- EP-A- 1 574 692
- DE-A1- 10 345 999
- US-B1- 6 786 212

## Description

### Technical Field

The present invention relates to a throttle opening control device, a motorcycle, and a method for producing a control map, and in particular to control for preventing the reverse rotation of an engine.

### Background Art

It has been known that in an engine mounted in a motorcycle or the like, if a gas pressure in a combustion chamber increases when an engine rotation speed decreases to a speed lower than an idle rotation speed, there is a possibility that the engine will be reversely rotated.

Japanese Unexamined Patent Publication No. 2006-207565 discloses an ignition control device of an engine for preventing the reverse rotation of the engine by forcibly making the engine misfire when the number of revolutions of the engine becomes lower than a threshold value determined according to a present engine load.

To prevent the reverse rotation of an engine, it is more preferable to prevent a gas pressure itself in a combustion chamber from increasing than to forcibly making the engine misfire when the gas pressure in the combustion chamber increases, because useless fuel consumption is decreased.

The present invention seeks to provide such a throttle opening control device, for example for a motorcycle, and a method for producing a control map that can prevent the occurrence of the reverse rotation of an engine.

### Summary

To solve the above-mentioned object, a throttle opening control device of the present invention includes: an accelerator opening acquisition section for acquiring an opening of an accelerator operated by a rider of a vehicle; an engine rotation speed acquisition section for acquiring a rotation speed of an engine mounted in the vehicle; and a throttle opening control section for controlling an opening of a throttle valve of the engine on a basis of the opening of the accelerator and the rotation speed of the engine, wherein the throttle opening control section limits the opening of the throttle valve for the rotation speed of the engine lower than an idle rotation speed.

Moreover, a motorcycle of the present invention is provided with the above-mentioned throttle opening control device.

Further, a method for producing a control map of the present invention is such a method for producing a control map that makes an opening of an accelerator operated by a rider of a vehicle and a rotation speed of the engine correspond to an opening of the throttle valve of the engine and which is mounted in a throttle opening control device for controlling the opening of a throttle valve of an engine, and is characterized in that the control map is produced on whether reverse rotation of the engine occurs when the opening of the throttle valve is increased in a state where the rotation speed of the engine is lower than a specified idle rotation speed.

In an embodiment of the present invention, the opening of the throttle is limited for the rotation speed of the engine lower than the idle rotation speed. With this, an increase in a gas pressure in the combustion chamber of the engine can be prevented. As a result, it is possible to prevent the occurrence of the reverse rotation of the engine.

### Brief Description of the Drawings

Example embodiments of the ivnetion are described hereinafter, by way of example only, with refence to the accompanying drawings.
Fig. 1 is an external view of a motorcycle according to an embodiment of the present invention.
Fig. 2 if a block diagram to show a construction example of a throttle opening control system.
Fig. 3 is a block diagram to show a function construction example of a throttle opening control device according to an embodiment of the present invention.
Fig. 4A is a diagram to show a setting example of a control map.
Fig. 4B is a diagram to show a setting example of the control map.
Fig. 5A is a diagram to show a portion of the control map.
Fig. 5B is a diagram to show a portion of the control map.
Fig. 5C is a diagram to show a portion of the control map.
Fig. 5D is a diagram to show a portion of the control map.
Fig. 5E is a diagram to show a portion of the control map.
Fig. 6A is a diagram to show a portion of the control map.
Fig. 6B is a diagram to show a portion of the control map.
Fig. 6C is a diagram to show a portion of the control map.
Fig. 6D is a diagram to show a portion of the control map.
Fig. 7 is a diagram to show a method for producing a control map.

### Detailed Description

An embodiment of the present invention will be described with reference to the drawings.

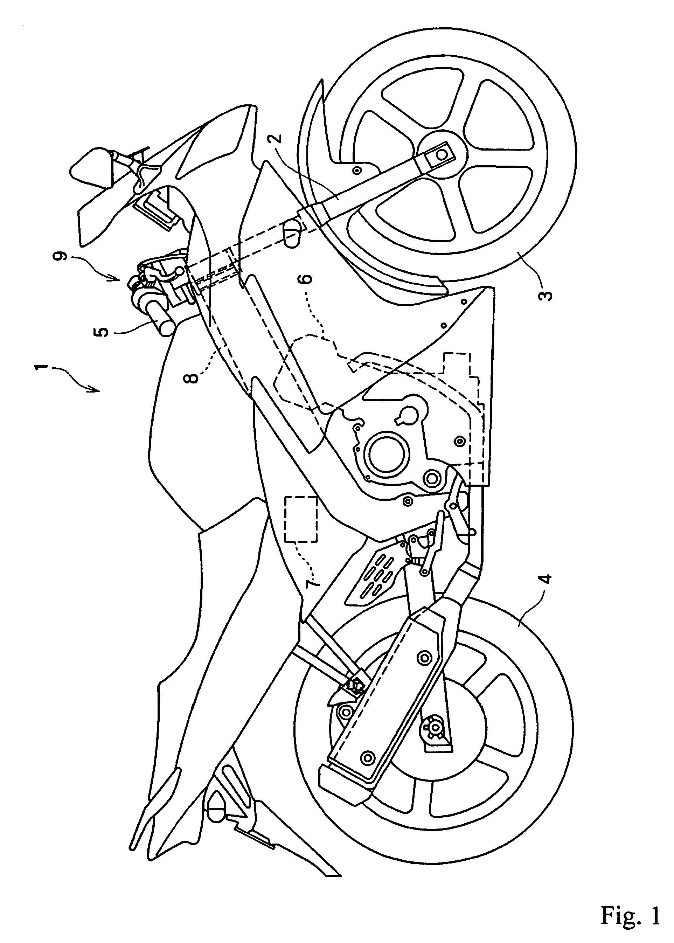

Fig. 1 is an external view of a motorcycle 1 according to an embodiment 1 of the present invention. As shown in the drawing, in the motorcycle 1, an engine 6 is suspended by a main frame 8 extending rearward downward from a head pipe for steerably supporting a front fork 2. The power of the engine 6 is transmitted to a rear wheel 4 by a chain. The front fork 2 rotatably supports a front wheel 3 and has a steering handlebar 9 fitted on its top. The steering handlebar 9 has an accelerator grip 5 fitted to its right end portion. A rider operates the direction of the front wheel 3 by the use of the steering handlebar 9 and can adjust the output of the engine 6 by twisting the accelerator grip 5.

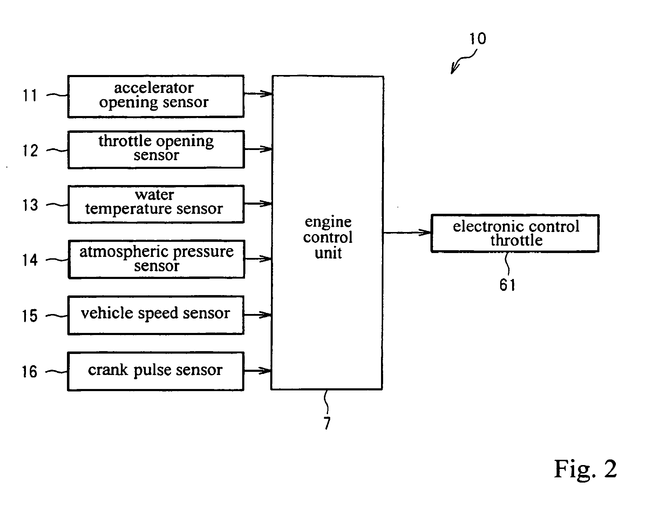

Fig. 2 is a block diagram to show a construction example of a throttle opening control system 10 mounted in the motorcycle 1. As shown in the drawing, the throttle opening control system 10 is mainly constructed of an engine control unit (ECU) 7 as a throttle opening control system according to an embodiment of the present invention. This ECU 7 is constructed of one or plural microprocessors, and executes a control program previously stored in a ROM to realize a throttle opening control according to this embodiment.

The motorcycle 1 is provided with: an accelerator opening sensor 11 for detecting the quantity of operation (quantity of twist) of the accelerator grip 5, that is, an accelerator opening; a throttle opening sensor 12 for detecting the opening (throttle opening) of a throttle valve (electronic control throttle 61 to be described later) of the engine 6; a water temperature sensor 13 for detecting the temperature of cooling water of the engine 6: an atmospheric pressure sensor 14 for detecting the atmospheric pressure; a vehicle speed sensor 15 for detecting the running speed of the motorcycle 1; and a crank pulse sensor 16 for detecting a crank pulse outputted in response to the revolution of a crankshaft of the engine 6. Detection results by these detection sensors are inputted to the ECU 7.

Moreover, the engine 6 of the motorcycle 1 is provided with the electronic control throttle 61, and the ECU 7 supplies the electronic control throttle 61 with a control signal on the basis of the detection results by the above-mentioned various detection devices. This electronic control throttle 61 is a throttle valve that can have its opening freely controlled by a DC motor according to the control signal from the ECU 7.

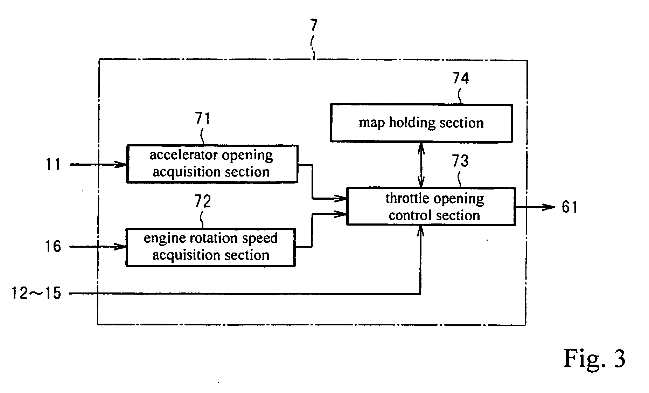

Fig. 3 is a block diagram to show a function construction example of the ECU 7. The ECU 7 functionally has an accelerator opening acquisition section 71, an engine rotation speed acquisition section 72, a throttle opening control section 73, and a map holding section 74. The accelerator opening acquisition section 71 acquires an accelerator opening on the basis of the detection signal from the accelerator opening sensor 11 and outputs the accelerator opening to the throttle opening control section 73. The engine rotation speed acquisition section 72 determines the rotation speed (the number of revolutions) of the engine 6 on the basis of the detection signal from the crank pulse sensor 16 and outputs the rotation speed of the engine 6 to the throttle opening control section 73.

The throttle opening control section 73 determines the throttle opening of the electronic control throttle 61 on the basis of the accelerator opening and the rotation speed of the engine, which are inputted thereto, and supplies the electronic control throttle 61 with a control signal so as to realize the determined throttle opening. Specifically, the throttle opening control section 73 produces a control signal for reducing the deviation between the throttle opening, determined on the basis of the accelerator opening and the engine rotation speed, and the present throttle opening acquired from the throttle opening sensor 12 and supplies the control signal to the electronic control throttle 61.

Here, the throttle opening control section 73 determines a throttle opening, which the electronic control throttle 61 needs to realize, on the basis of a control map held by the map holding section 74. This control map is a three dimensional map that makes the throttle opening correspond to the accelerator opening and the engine rotation speed, and the throttle opening control section 73 reads a throttle opening corresponding to the accelerator opening and the engine rotation speed with reference to the control map.

The control map will be described in detail.

Moreover, the throttle opening control section 73 corrects the throttle opening read from the control map on the basis of the output from the water temperature sensor 13 and the atmospheric pressure sensor 14 and determines a final throttle opening.

Moreover, the map holding section 74 holds plural control maps corresponding to the respective states of the transmission of the engine 6, and the throttle opening control section 73 determines a present transmission ratio of the transmission of the engine 6 from the ratio between the engine rotation speed and the vehicle speed of the motorcycle 1, acquired from the vehicle speed sensor 15, and refers to the control map corresponding to the transmission ratio.

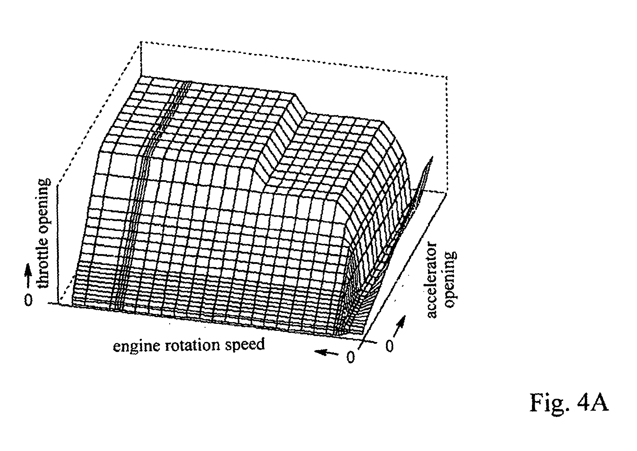

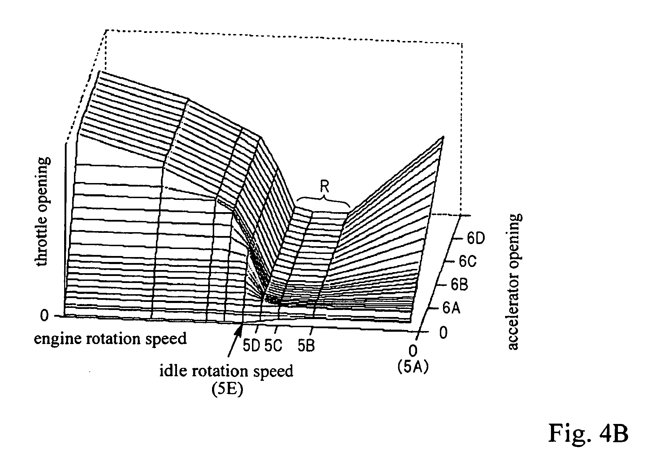

Figs. 4A and 4B are diagrams to show a specific setting example of the control map. Of these drawings, Fig. 4A is a diagram to show the whole of the control map, and Fig. 4B is a diagram to enlarge a range in which the engine rotation speed is small of the control map. This control map is a map applied to a case in which the transmission of the engine 6 is determined to be neutral, for example, at the time of startup, to a period of time that elapses from the startup of the engine until a clutch is connected.

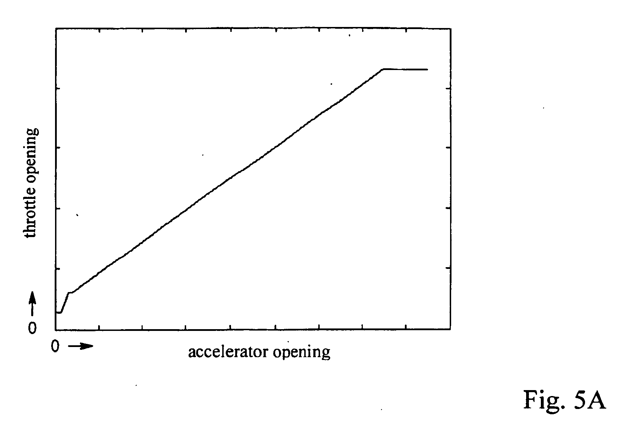

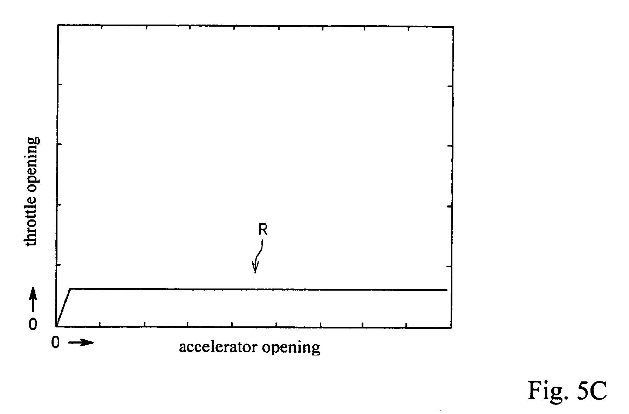

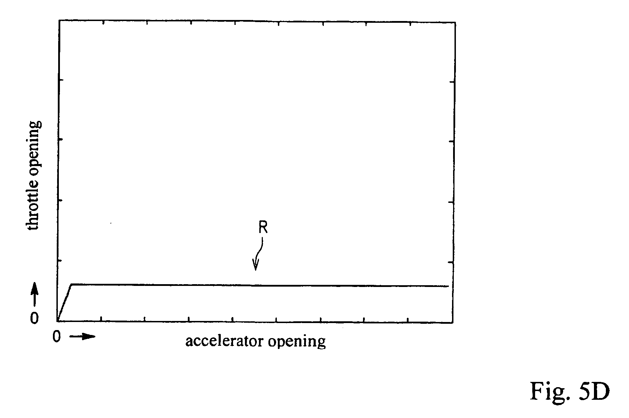

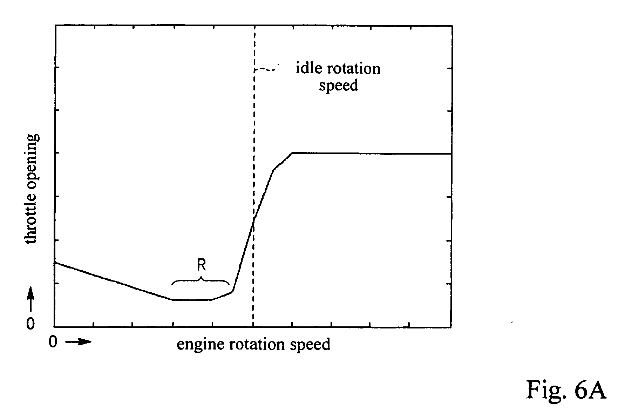

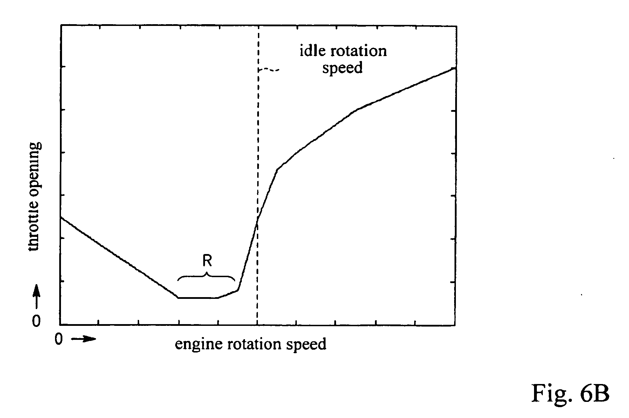

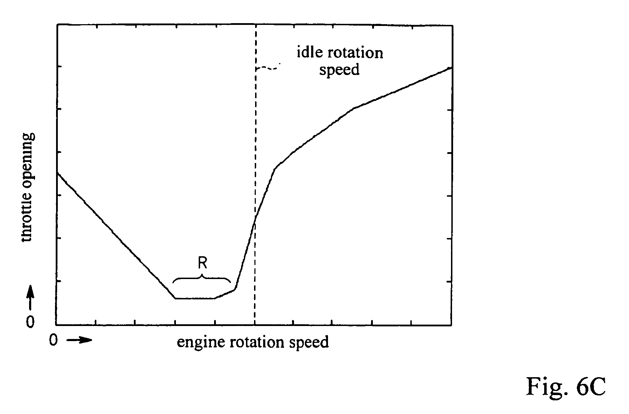

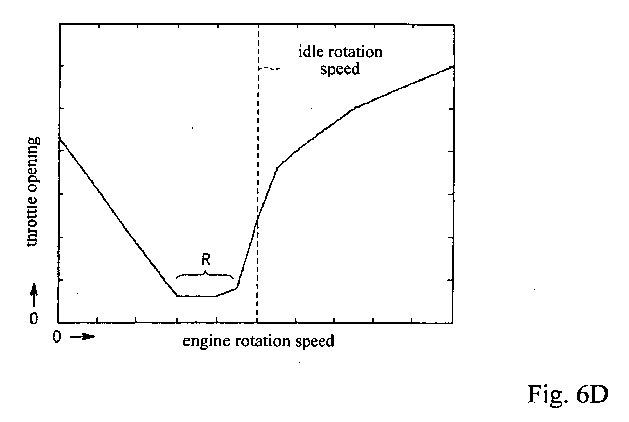

Moreover, Figs. 5A to 5E are diagrams to show the relationship between the accelerator opening and the throttle opening in the control map. These diagrams correspond to the respective engine rotation speeds of 5A to 5E in Fig. 4B. Further, Figs. 6A to 6D are diagrams to show the relationship between the engine rotation speed and the throttle opening in the control map. These diagrams correspond to the respective accelerator openings of 6A to 6D in Fig, 4B.

As shown in Fig. 4A, the control map is set in such a way that the throttle opening roughly follows the accelerator opening in a range in which the engine rotation speed is larger than an idle rotation speed. Specifically, in a range in which the accelerator opening is small, the throttle opening is in a linear relationship with the accelerator opening, whereas in a range in which the accelerator opening is large, the throttle opening is constant irrespective of the accelerator opening.

On the other hand, as shown in Fig. 4B, in the control map, in a range in which the engine rotation speed is lower than the idle rotation speed, the throttle opening is limited so as to prevent the reverse rotation of the engine. Specifically, the throttle opening is made small in a band-shaped range R that covers the higher side of the engine rotation speed in the range in which the engine rotation speed ranges from zero to the idle rotation speed_and that covers the entire range of the accelerator opening. The throttle opening in this range R is sufficiently small as compared with the throttle opening at the idle rotation speed. By limiting the throttle opening in this manner, an increase in a gas pressure in the combustion chamber of the engine 6 can be prevented. With this, the occurrence of the reverse rotation of the engine 6 can be prevented.

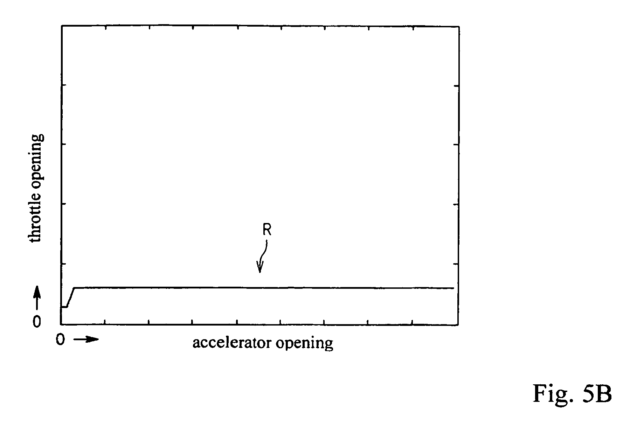

Moreover, as shown in Figs. 5B to 5D, the throttle opening is set constant, irrespective of the accelerator opening, over a wide range except for a portion where the accelerator opening is near zero of the above-mentioned range R. With this, while the occurrence of the reverse rotation of the engine 6 is prevented, the throttle opening capable of supplying the quantity of fuel necessary for the forward rotation of the engine 6 can be easily kept over the above-mentioned wide range R. That is, whether or not the reverse rotation of the engine 6 occurs depends on the relationship between the engine rotation speed and the throttle opening, as will be described later, so that it is preferable that the an appropriate throttle opening is held constant irrespective of the accelerator opening.

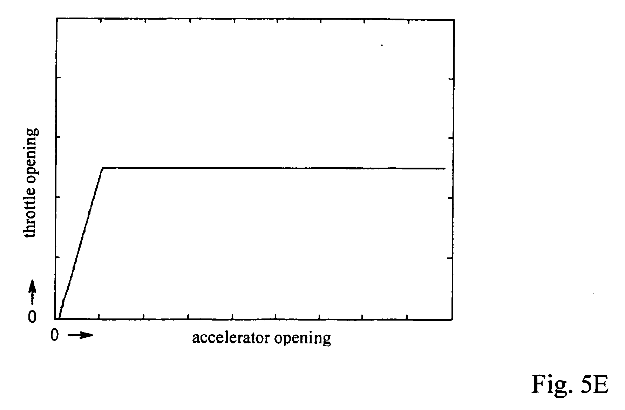

Further, as shown in Figs. 6A to 6D, the throttle opening in the range R is set lower than the throttle opening when the engine rotation speed is 0. For this reason, the throttle opening forms the shape of a valley in which a bottom portion is formed in the above-mentioned range R in the range of the engine rotation speed from zero to the idle rotation speed. Here, the reason why the throttle opening when the engine rotation speed is 0 is linearly changed for the accelerator opening (see Fig. 5E) is that when the accelerator 5 is operated in a state where the engine 6 is stopped, a rider can be made to visually check that the throttle valve is operated according to the operation of the accelerator 5.

In this regard, the control map described above is a control map applied to a case where the transmission of the engine 6 is determined to be neutral, but in addition to this, the same control map may be applied also to a case where the transmission of the engine 6 is in the other state (a state of any transmission ratio).

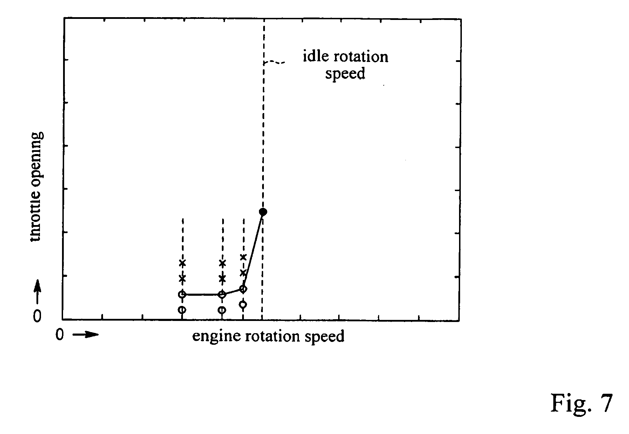

Fig. 7 is a diagram to show a method for producing a control map. Here, a method for producing a control map in a range where the engine rotation speed is lower than the idle rotation speed, of the control map, will be described. This range is produced as follows: the condition under which the reverse rotation of the engine 6 occurs is found by experiment and then the range is produced on the basis of the experiment result.

Specifically, first, the electronic control throttle 61 is controlled to adjust the throttle opening in such a way that the engine rotation speed becomes lower than the idle rotation speed. Here, the idle rotation speed is previously determined as a large engine rotation speed which is enough to prevent the occurrence of the reverse rotation of the engine 6, and a throttle opening for keeping the idle rotation speed is also determined in advance.

Then, the electronic control throttle 61 is controlled to increase the throttle opening in a state where the engine rotation speed is lower than the idle rotation speed. At this time, when a more quantity of air-fuel mixture than can be compressed flows into the combustion chamber of the engine 6, the reverse rotation of the engine 6 occurs. Thus, it is determined whether or not the reverse rotation of the engine 6 occurs, and the engine rotation speed and the throttle opening (throttle opening after increase) are recorded in correspondence with each other. Here, whether or not the reverse rotation of the engine 6 occurs can be determined, for example, on the basis of the detection signal from the crank pulse sensor 16.

The above-mentioned process is performed repeatedly plural times while the engine rotation speed and the throttle opening are varied respectively. With this, as shown in Fig. 7, the conditions under which the reverse rotation of the engine 6 occurs or does not occur can be found in the relationship between the engine rotation speed and the throttle opening.

Then, from the result acquired in this process, the relationship between the engine rotation speed and the throttle opening in which the reverse rotation of the engine does not occur is set in the control map. With this, the throttle opening that can prevent the occurrence of the reverse rotation of the engine 6 in a range in which the engine rotation speed is lower than the idle rotation speed is set in the control map.

Here, it is preferable to set a larger throttle opening in the control map among the throttle openings to prevent the occurrence of the reverse rotation of the engine 6.

With this, it is possible to supply a quantity of fuel which is enough for the forward rotation of the engine 6. Moreover, as described above, when the throttle opening read from the control map is corrected according to the water temperature and the atmospheric pressure, it is preferable to set the throttle opening in consideration of a maximum variation by the correction.

Moreover, the relationship between the engine rotation speed and the throttle opening, set in this manner, is set over nearly the entire range of the accelerator opening. The range in which the engine rotation speed is lower than the idle rotation speed, of the control map, is produced in the manner described above.

### Description of the Reference Numerals

1- motorcycle, 2- front fork, 3- front wheel, 4- rear wheel, 5- accelerator grip, 6- engine, 7- engine control unit. 8- main frame, 9- steering handlebar, 10- throttle opening control system, 11- accelerator opening sensor, 12- throttle opening sensor, 13- water temperature sensor, 14- atmospheric pressure sensor, 15- vehicle speed sensor, 16- crank pulse sensor, 61- electronic control throttle, 71- accelerator opening acquisition section, 72- engine rotation speed acquisition section, 73- throttle opening control section, 74-map holding section.

## Claims

1. A throttle opening control device comprising:
an accelerator opening acquisition section for acquiring an opening of an accelerator operated by a rider of a vehicle;
an engine rotation speed acquisition section for acquiring a rotation speed of an engine mounted in the vehicle; and
a throttle opening control section for controlling an opening of a throttle valve of the engine on a basis of the opening of the accelerator and the rotation speed of the engine,
wherein the throttle opening control section limits the opening of the throttle valve for a rotation speed of the engine lower than an idle rotation speed.

2. The throttle opening control device as claimed in claim 1, further comprising
a map holding section for holding a control map that makes the opening of the throttle valve correspond to the opening of the accelerator and the rotation speed of the engine and in which the opening of the throttle is limited for the rotation speed of the engine lower than the idle rotation speed,
wherein the throttle opening control section controls the opening of the throttle valve on a basis of the control map.

3. The throttle opening control device as claimed in claim 1,
wherein the throttle opening control section controls the opening of the throttle valve so as to prevent occurrence of reverse rotation of the engine.

4. The throttle opening control device as claimed in claim 2,
wherein in the control map, the opening of the throttle valve is limited so as to prevent occurrence of reverse rotation of the engine.

5. The throttle opening control device as claimed in claim 2,
wherein the control map is produced on a basis of whether or not reverse rotation of the engine occurs when the opening of the throttle valve is increased in a state where the rotation speed of the engine is lower than the idle rotation speed.

6. The throttle opening control device as claimed in claim 1,
wherein the opening of the throttle valve is set constant, irrespective of the opening of the accelerator, in a range of at least a portion of a range in which the rotation speed of the engine is lower than the idle rotation speed and in a range of a specified opening of the accelerator or more,

7. The throttle opening control device as claimed in claim 1,
wherein the opening of the throttle valve is set lower than the opening of the throttle valve when the rotation speed of the engine is zero in a range of at least a portion of a range in which the rotation speed of the engine is lower than the idle rotation speed.

8. A motorcycle provided with the throttle opening control device as claimed in any one of claims 1 to 7.

## Patentansprüche

1. Drosselöffnungs- Steuerungsvorrichtung, aufweisend:
eine Beschleunigeröffnungs- Erlangungsabschnitt zum Erlangen einer Öffnung eines Beschleunigers, betätigt durch einen Fahrer eines Fahrzeuges;
einen Motordrehzahl- Erlangungsabschnitt zum Erlangen einer Drehzahl einer Brennkraftmaschine, die in dem Fahrzeug montiert ist; und
einen Drosselöffnungs- Steuerungsabschnitt zum Steuern einer Öffnung eines Drosselventils der Brennkraftmaschine auf einer Grundlage der Öffnung des Beschleunigers und der Drehzahl der Brennkraftmaschine,
wobei der Drosselöffnungs- Steuerungsabschnitt die Öffnung des Drosselventils für eine Drehzahl der Brennkraftmaschine, niedriger als eine Leerlaufdrehzahl, begrenzt.

2. Drosselöffnungs- Steuerungsvorrichtung nach Anspruch 1, außerdem aufweisend:
einen Planhalteabschnitt zum Halten eines Steuerplans, der veranlasst, dass die Öffnung des Drosselventils der Öffnung des Beschleunigers und der Drehzahl der Brennkraftmaschine entspricht und in dem die Öffnung der Drossel für die Drehzahl der Brennkraftmaschine, wenn sie niedriger als die Leerlaufdrehzahl ist, begrenzt wird,
wobei der Drosselöffnungs- Steuerungsabschnitt die Öffnung des Drosselventils auf der Grundlage des Steuerplanes steuert.

3. Drosselöffnungs- Steuerungsvorrichtung nach Anspruch 1,
wobei der Drosselöffnungs- Steuerungsabschnitt die Öffnung des Drosselventils steuert, um das Auftreten der Umkehrdrehung der Brennkraftmaschine zu verhindern.

4. Drosselöffnungs- Steuerungsvorrichtung nach Anspruch 2,
wobei in dem Steuerplan die Öffnung des Drosselventils begrenzt ist, um das Auftreten von Unkehrdrehung der Brennkraftmaschine zu verhindern.

5. Drosselöffnungs- Steuerungsvorrichtung nach Anspruch 2,
wobei der Steuerplan auf einer Grundlage von ob oder nicht die Umkehrdrehung der Brennkraftmaschine auftritt, wenn die Öffnung des Drosselventils erhöht wird in einem Zustand, in dem die Drehzahl der Brennkraftmaschine niedriger als die Leerlaufdrehzahl ist.

6. Drosselöffnungs- Steuerungsvorrichtung nach Anspruch 1,
wobei die Öffnung des Drosselventils unabhängig von dem Öffnen des Beschleunigers konstant festgelegt wird, in einem Bereich von zumindest einem Abschnitt eines Bereichs, in dem die Drehzahl der Brennkraftmaschine niedriger als die Leerlaufdrehzahl ist und in einem Bereich eines bestimmten Öffnens des Beschleunigers oder mehr ist.

7. Drosselöffnungs- Steuerungsvorrichtung nach Anspruch 1,
wobei die Öffnung des Drosselventils niedriger als die Öffnung des Drosselventils festgelegt wird, wenn die Drehzahl der Brennkraftmaschine Null ist in einem Bereich von zumindest einem Abschnitt eines Bereiches, in dem die Drehzahl der Brennkraftmaschine niedriger als die Leerlaufdrehzahl ist.

8. Motorrad, versehen mit der Drosselöffnungs- Steuerungsvorrichtung nach einem der Ansprüche 1 bis 7.

## Revendications

1. Dispositif de commande d'ouverture de papillon, comprenant :
une section d'acquisition d'ouverture d'accélérateur pour recueillir une ouverture d'un accélérateur actionné par le conducteur d'un véhicule ;
une section d'acquisition de vitesse de rotation de moteur pour recueillir une vitesse de rotation d'un moteur monté dans le véhicule ; et
une section de commande d'ouverture de papillon pour commander une ouverture d'un papillon du moteur sur la base de l'ouverture de l'accélérateur et de la vitesse de rotation du moteur,
la section de commande d'ouverture de papillon limitant l'ouverture du papillon pour une vitesse de rotation du moteur inférieure à une vitesse de rotation au ralenti.

2. Dispositif de commande d'ouverture de papillon tel que revendiqué dans la revendication 1, comprenant également une section de stockage de mappe pour stocker une mappe de commande qui fait correspondre l'ouverture du papillon à l'ouverture de l'accélérateur et à la vitesse de rotation du moteur et dans laquelle l'ouverture du papillon est limitée pour la vitesse de rotation du moteur inférieure à la vitesse de rotation au ralenti,
la section de commande d'ouverture de papillon commandant l'ouverture du papillon sur une base de la mappe de commande.

3. Dispositif de commande d'ouverture de papillon tel que revendiqué dans la revendication 1, dans lequel la section de commande d'ouverture de papillon commande l'ouverture du papillon de manière à empêcher l'apparition d'une rotation inversée du moteur.

4. Dispositif de commande d'ouverture de papillon tel que revendiqué dans la revendication 2, dans lequel dans la mappe de commande l'ouverture du papillon est limitée de manière à empêcher l'apparition d'une rotation inversée du moteur.

5. Dispositif de commande d'ouverture de papillon tel que revendiqué dans la revendication 2, dans lequel la mappe de commande est produite sur la base de l'apparition ou non d'une rotation inversée du moteur quand l'ouverture du papillon augmente dans un état où la vitesse de rotation du moteur est inférieure à la vitesse de rotation au ralenti.

6. Dispositif de commande d'ouverture de papillon tel que revendiqué dans la revendication 1, dans lequel l'ouverture du papillon est fixée pour être constante, quelle que soit l'ouverture de l'accélérateur, dans une plage d'au moins une partie d'une plage dans laquelle la vitesse de rotation du moteur est inférieure à la vitesse de rotation au ralenti et dans une plage d'une ouverture spécifiée de l'accélérateur ou plus.

7. Dispositif de commande d'ouverture de papillon tel que revendiqué dans la revendication 1, dans lequel l'ouverture du papillon est fixée pour être inférieure à l'ouverture du papillon quand la vitesse de rotation du moteur est de zéro dans une plage d'au moins une partie d'une plage dans laquelle la vitesse de rotation du moteur est inférieure à la vitesse de rotation au ralenti.

8. Motocycle pourvu du dispositif de commande d'ouverture de papillon tel que revendiqué dans l'une quelconque des revendications 1 à 7.
